# EUROPEAN PATENT APPLICATION

(11) **EP 4 803 552 A1**
(43) Date of publication of application: **09.09.2026**
(21) Application number: 23957021.1
(22) Date of filing: 31.10.2023
(51) Int. Cl.: C08B 15/00, C08L 1/00, C08J 3/24

(54) **A BIOPOLYMER COMPOSITION FOR GENERATING A SUPERABSORBENT HYDROGEL FOR USE IN AGRICULTURE**

(71) Applicant: Universidad De Concepcion, Concepción (CL)
(72) Inventor: URBANO CANTILLANA, Bruno, Concepción (CL); VERA OTERO, Myleidi, Concepción (CL); ULLOA SOTO, Jose, Concepción (CL); AGUILERA MARIN, Narciso, Concepción (CL); LAGOS ROA, Luis, Concepción (CL)
(74) Representative: Clarke, Modet y Cía., S.L.
(86) International application number: PCT/CL2023/050098
(87) International publication number: WO 2025/091138

(57) **Abstract**

The present invention relates to a biopolymer composition for generating a superabsorbent hydrogel comprising at least a) a matrix formed by a mixture of polysaccharides; b) a hydrolysable tannin-derived physical cross-linking agent, and c) a chemical crosslinker of natural origin. This biopolymer composition is presented in dry powder form, which forms the superabsorbent hydrogel when applied to soil and in contact with water, the hydrogel having a water absorption capacity above 100 g/g. Moreover, in addition to water, said hydrogel can also store substances dissolved in water, such as salts, fertilisers or agrochemical products. As a result, it is suitable for releasing water and other agronomically useful substances.

## Description

### TECHNICAL SECTOR

Technology is focused on the efficient use of water in agriculture, focusing on the use of compositions that allow a greater moisture retention in soil, better aeration, reduction in water consumption, efficiency of fertilizer use and reduction in soil degradation.

### STATE OF THE ART

Water is a fundamental resource in agriculture, and it is well known that plant growth and crop quality are closely related to the amount of water and the efficiency of its use [1]. However, due to the increase in droughts, desertification, climate change, and, in general, the growing demand for food, this limited resource is becoming increasingly scarce. Among the recommendations to reduce water-related risks are, in addition to water treatment, reuse, and recycling, and green infrastructure, the improvement of water-use efficiency in the agricultural sector. Globally, more than 70% of freshwater is used in agriculture, and it is estimated that a 50% increase in agricultural production will be required by 2050.

Currently, the use of hydrogels in agriculture has attracted increasing interest, as it enables improved water-use efficiency and nutrient-use efficiency in crops. Hydrogels are hydrophilic polymers that absorb water without dissolving. When water absorption exceeds ten times their own weight, they are referred to as superabsorbent polymers [2]. In simple terms, during rainfall or irrigation, hydrogels absorb and retain large amounts of water, acting as an additional water reservoir. As the soil dries during periods of drought, the water absorbed in the SAP is released into the soil, thereby supplying water to plant roots. Hydrogel also retains drainage water and therefore reduces the irrigation frequency, which saves water, being particularly important during the drought period [3].

Among the main advantages of the use of hydrogels in agriculture are a greater moisture retention in soil, better aeration, reduction in water consumption, reduction in water consumption, fertilizer-use efficiency, reduction in soil degradation, and reduction in unnecessary environmental contamination associated with fertilizer losses due to leaching, as well as improved soil structure and increased crop yield, thereby promoting the development of agriculture [4-7].

Most commercially available superabsorbents for applications in agroindustry involve the use of synthetic polymers such as poly(acrylic acid), polyacrylamide, and potassium polyacrylate. The main reason for the use of synthetic polymers is the high absorption capacities achieved (100 to 500 g/g) [8]. In addition, synthetic hydrogels are characterized by high durability, greater mechanical strength, and lower cost [9]. Although synthetic polymers are effective in maintaining soil moisture, they exhibit low degradability and are considered potential soil contaminants, which limits their future use in agriculture [10]. The incorporation of compounds with ion-exchange properties at high concentrations (for example, sodium polyacrylate) leads to soil salinization, which may reduce soil microbial activity and the mineralization of organic matter [11]. The situation is more concerning for superabsorbents based on polyacrylamide, which is considered non-toxic in its polymeric form, however, the presence of residual monomer (acrylamide) and other toxic intermediates in the final product may cause harmful effects to humans and the environment [12]. Acrylamide is considered a neurotoxin in humans, and its effects on human health are severe [13]; for example, acrylamide has been shown to be neurotoxic, genotoxic, and carcinogenic, among other effects [13-16].

In order to provide biodegradability to the polymer chain while maintaining high water absorption capacities, the synthesis of hydrogels comprising both synthetic and natural components has been proposed [18]. Some recently explored strategies include the synthesis of hydrogels based on mixtures of polyacrylamide and alginate or chitosan (absorption capacities 370 g^{•}g⁻¹)[19], copolymers based on mixtures of lignin and poly(vinyl alcohol) (absorption capacities above 500 g^{•}g⁻¹)[20], starch graft copolymers with acrylonitrile (absorption capacity 250 g^{•}g⁻¹), and starch-acrylamide graft copolymers (absorption capacity 550 g^{•}g⁻¹)[21]. Although the use of synthetic-natural multicomponent hydrogels represents a more environmentally friendly alternative to synthetic polymers, with high water absorption capacities, good controlled-release properties for fertilizers, and good mechanical properties [4], synthetic oligomer chains remain in the soil after degradation, which occurs primarily in the natural polymer chains.

In this context, the synthesis of hydrogels derived exclusively from natural sources has been proposed as an environmentally friendly alternative, in particular, polysaccharides have been reported in synthesis of natural hydrogels with significant potential for application in agriculture due to their biodegradability, low cost, non-toxicity, abundance, and renewability. Among the polysaccharides reported are pectin, starch, alginate, chitin, cellulose and their derivatives [22, 23].

So far, similar technologies have sought to respond to this problem, such as:
EP2535359A1: Relates to a biodegradable hydrogel polymer for agricultural sector comprising an ionic polymer which is carboxy methyl cellulose (CMC) and citric acid.
US11363813: Environmentally friendly hydrogel to modify the rheological conditions of agricultural compositions. The main component is derived from lactose.
US2003232895: Relates to a reinforced hydrogel, where one of the possible components used to reinforce the hydrogel is CMC, in addition a form of use is described as a pharmaceutical composition that also incorporates tannic acid.
US2011059162: Relates to a composition comprising a chitosan matrix with tannins, where this composition can be used as a nanoparticle, a hydrogel, a biogel or the outer part of a liposome.
US20220296720: Composition comprising chitosan, tannins and an active agent, wherein this composition can be used as a hydrogel for medical use.
US20080132632: Relates to an absorbent aerogel for domestic use, which mainly comprises clays. Within the description, an embodiment is mentioned that also contains CMC and citric acid, among its components.

Despite the technologies described above, there remains a need to identify new bio-based superabsorbent alternatives that, in addition to being sustainable, promote sustainable agriculture, are cost-competitive, exhibit high absorption capacities, and possess good mechanical properties that confer stability to the hydrogel in the swollen state.

### References

[1] 1 Misiewicz, A. Glogowski, K. Lejcuś, D. Marczak, The Characteristics of Swelling Pressure for Superabsorbent Polymer and Soil Mixtures, Materials, 13 (2020) 5071.
[2] MJ. Zohuriaan-Mehr, K. Kabiri, Superabsorbent polymer materials: A review, Iranian Polymer Journal (English Edition), 17 (2008) 451-477.
[3] A. Saha, S. Sekharan, U. Manna, Superabsorbent hydrogel (SAH) as a soil amendment for drought management: A review, Soil and Tillage Research, 204 (2020).
[4] R. Michalik, I. Wandzik, A mini-review on chitosan-based hydrogels with potential for sustainable agricultural applications, Polymers, 12 (2020) 2425.
[5] B. Azeem, K. KuShaari, Z.B. Man, A. Basit, T.H. Thanh, Review on materials & methods to produce controlled release coated urea fertilizer, Journal of controlled release, 181 (2014) 11-21.
[6] F. Ai, X. Yin, R. Hu, H. Ma, W. Liu, Research into the super-absorbent polymers on agricultural water, Agricultural Water Management, (2020) 106513.
[7] Y. Yang, J. Wu, S. Zhao, C. Gao, X. Pan, D.W.S. Tang, M. van der Ploeg, Effects of long-term super absorbent polymer and organic manure on soil structure and organic carbon distribution in different soil layers, Soil and Tillage Research, 206 (2021) 104781.
[8] A. Saha, B. Rattan, S. Sekharan, U. Manna, Quantifying the Interactive effect of water absorbing polymer (WAP)-soil texture on plant available water content and irrigation frequency, Geoderma, 368 (2020) 114310.
[9] S. Behera, P.A. Mahanwar, Superabsorbent polymers in agriculture and other applications: a review, Polymer-Plastics Technology and Materials, 59 (2020) 341-356.
[10] B. Tomadoni, C. Casalongué, V.A. Alvarez, Biopolymer-based hydrogels for agriculture applications: Swelling behavior and slow release of agrochemicals, Polymers for Agri-food applications, Springer2019, pp. 99-125.
[11] K. Singh, Microbial and Enzyme Activities of Saline and Sodic Soils, Land Degradation & Development, 27 (2016) 706-718.
[12] X. Dai, F. Luo, J. Yi, Q. He, B. Dong, Biodegradation of polyacrylamide by anaerobic digestion under mesophilic condition and its performance in actual dewatered sludge system, Bioresource Technology, 153 (2014) 55-61.
[13] K.L. Dearfield, C.O. Abernathy, M.S. Ottley, J.H. Brantner, P.F. Hayes, Acrylamide: its metabolism, developmental and reproductive effects, genotoxicity, and carcinogenicity, Mutation Research/Reviews in Genetic Toxicology, 195 (1988) 45-77.
[14] J.H. Exon, A Review of the Toxicology of Acrylamide, Journal of Toxicology and Environmental Health, Part B, 9 (2006) 397-412.
[15] R.M. LoPachin, The changing view of acrylamide neurotoxicity, NeuroToxicology, 25 (2004) 617-630.
[16] V. Matoso, P. Bargi-Souza, F. Ivanski, M.A. Romano, R.M. Romano, Acrylamide: A review about its toxic effects in the light of Developmental Origin of Health and Disease (DOHaD) concept, Food Chemistry, 283 (2019) 422-430.
[17] A. Nyyssölä, J. Ahlgren, Microbial degradation of polyacrylamide and the deamination product polyacrylate, International Biodeterioration & Biodegradation, 139 (2019) 24-33.
[18] M. Klein, E. Poverenov, Natural biopolymer-based hydrogels for use in food and agriculture, Journal of the Science of Food and Agriculture, 100 (2020) 2337-2347.
[19] A.M. Elbarbary, H.A. Abd EI-Rehim, N.M. El-Sawy, E.-S.A. Hegazy, E.-S.A. Soliman, Radiation induced crosslinking of polyacrylamide incorporated low molecular weights natural polymers for possible use in the agricultural applications, Carbohydrate polymers, 176 (2017) 19-28.
[20] L. Wu, S. Huang, J. Zheng, Z. Qiu, X. Lin, Y. Qin, Synthesis and characterization of biomass lignin-based PVA super-absorbent hydrogel, International journal of biological macromolecules, 140 (2019) 538-545.
[21] X. Bao, L. Yu, S. Shen, G.P. Simon, H. Liu, L. Chen, How rheological behaviors of concentrated starch affect graft copolymerization of acrylamide and resultant hydrogel, Carbohydrate polymers, 219 (2019) 395-404.
[22] B. Song, H. Liang, R. Sun, P. Peng, Y. Jiang, D. She, Hydrogel synthesis based on lignin/sodium alginate and application in agriculture, International journal of biological macromolecules, 144 (2020) 219-230.
[23] E. Motamedi, B. Motesharezedeh, A. Shihnfekr, S.M. Samar, Synthesis and swelling behavior of environmentally friendly starch-based superabsorbent hydrogels reinforced with natural char nano/micro particles, Journal of Environmental Chemical Engineering, 8(2020)103583.
[24] K. Wilpiszewska, A.K. Antosik, T. Spychaj, Novel hydrophilic carboxymethyl starch/montmorillonite nanocomposite films, Carbohydrate Polymers, 128 (2015) 82-89.

### BRIEF DESCRIPTION OF THE DRAWINGS

**Figure 1****:** Image of the superabsorbent.
**Figure 2****:** Equilibrium absorption capacity for different types of water.
**Figure 3****:** Superabsorbent degradation tests. Initial (left) and final (right) state samples.
**Figure 4****:** Ecotoxicity tests on *Raphanus sativus,* OEDC 208 standard.
**Figure 5****:** Soil water tension curves.
**Figure 6****:** Morphometric study of *Solanum lycopersicum*

### DESCRIPTION OF THE INVENTION

A biopolymer composition is presented for generating a superabsorbent hydrogel that serves to improve the water retention capacity in soil. This composition comprises a mixture of components based on biopolymers which, through physical and chemical crosslinking, impart elasticity and structural stability to the superabsorbent. The composition has the ability to absorb and retain water in soil, enabling efficient use of this resource, which is essential for the development of sustainable agriculture.

As a first aspect of protection, a biopolymeric composition for production of a superabsorbent hydrogel is provided, comprising at least:
a) a matrix of a biodegradable polymer comprising a mixture of polysaccharides, preferably carboxymethyl cellulose (CMC) and hydroxyethyl cellulose (HEC) in a 3:1 ratio, maintaining a total polymer concentration of from 1.0 to 5.0% w/v with respect to water, which impart hydrophilicity and biodegradability to the superabsorbent hydrogel;
b) a physical crosslinking agent derived from hydrolyzable tannins, preferably tannic acid (TA), which imparts flexibility to the polymer matrix, present in an amount of from 0.25 to 3.0% w/w with respect to the polysaccharide mixture; and
c) a chemical crosslinker of natural origin that reacts with hydroxyl groups of the biopolymer, such as citric acid (CA), which provides structural stability to the hydrogel, wherein the amount of said crosslinker is from 0.5% to 5.0% w/w with respect to the polysaccharide mixture.

The biopolymeric composition is provided in the form of a dry powder which, upon application to soil and upon contact with water, forms a superabsorbent hydrogel, said hydrogel exhibits a water absorption capacity above 100 g/g and is capable not only of storing water but also water-dissolved substances such as salts, fertilizers, or agrochemicals. The hydrogel is suitable for the sustained release of water and other agronomically relevant substances.

As a second aspect of protection, a process for preparing the biopolymeric composition is provided, comprising at least the following steps:
a) adding CMC to water under mechanical stirring at 80 - 120 rpm for 20 - 60 minutes at room temperature;
b) adding HEC at a CMC/HEC 3:1 ratio, maintaining a total polymer concentration from 1.0 to 5.0% w/v with respect to water;
c) mixing under stirring for 2 - 8 hours at room temperature until a homogeneous, translucent mixture of biopolymers is obtained;
d) adding CA in an amount from 0.5 to 5.0% w/w and tannic acid (TA) in an amount from 0.25 to 3.0% w/w, both with respect to the polymer, and incorporating them by mechanical stirring at 80-120 rpm for 2 hours at room temperature; and
e) crosslinking and dehydrating the resulting mixture by heating at a temperature of from 30 to 60 °C for 12 hours. The solid obtained is crushed to obtain solid particles of crystalline appearance.

The choice of CMC and HEC biopolymers is based on their outstanding ability to absorb and diffuse water within the copolymer matrix, taking advantage of both osmotic and electrostatic pressure phenomena, in addition to their biodegradation capacity. The crosslinkers chosen are biodegradable, do not present ecological risks, can be obtained from natural sources, are economically accessible and fulfil the function of providing mechanical stability to the network (citric acid) and flexibility to accommodate water molecules (tannic acid). The proportions of both crosslinkers, namely chemical and physical crosslinkers, as well as the amount of polysaccharides used in the synthesis of superabsorbent, correspond to the concentrations that provide the highest water absorption capacity in the hydrogel.

The CMC used is a cellulose derivative containing carboxymethyl groups that are generated by the reaction of cellulose with chloroacetate in alkali to produce substitutions at C2, C3 or C6 positions of glucose units, these structural characteristics give the polymer high sensitivity to changes in pH and ionic strength. In addition, as a consequence of the Gibbs-Donnan effect, this polyelectrolyte promotes osmotic pressure, forcing water to enter the hydrogel, and thus improving the swelling capacity, CMC is soluble in water at any temperature, has a highly hygroscopic nature, rapid hydration, and biodegradability.

On the other hand, HEC is a biopolymer that has a large number of hydroxyl groups, which gives it diffusion properties, high swelling capacity and crosslinking capacity. With these properties, intermolecular crosslinking is favored over intramolecular crosslinking when it is present in mixtures with other polysaccharides. In addition, it has properties of renewability, low cost, and has been shown to act as a soil conditioner, modifying microbial activity, increasing the amount of organic carbon and the diameter of the average weight of the soil, and consequently generating indirect plant growth.

Crosslinking is key in the synthesis of hydrogels, as mentioned, natural polymers lack good mechanical properties and gel strength, and in this sense, crosslinking provides structural stability (prevents polymer dissolution) and provides volume to accommodate water molecules. However, a high degree of crosslinking leads to a decrease in the absorption capacity as there are more points of attachment between the polymer chains that oppose network expansion. The present biopolymer composition has two crosslinking agents, tannic acid (TA) as a physical crosslinker and citric acid (CA) as a chemical crosslinker. Tannic acid (TA) is a biodegradable natural (non-flavonoid) plant polyphenol that can form multiple hydrogen bonds with polyols and consequently provides toughness and elasticity to the network for expansion with the solvent. Citric acid (CA) can be considered a covalent crosslinker of different carbohydrate polymers that can be degraded without releasing toxic byproducts. Unlike other chemical crosslinkers (carbodiimide, glutaraldehyde, epichlorohydrin, etc.) CA has received a lot of attention due to its low cost, availability, and most importantly, non-toxicity. CA provides structural stability to the biopolymer network through formed covalent bonds.

All the compounds that make up the biopolymer composition to obtain the hydrogel have demonstrated their biodegradable properties. It is important to note that the existence of crosslinking in the polymer decreases the biodegradation rate and thus extends the useful life of the hydrogel in soil.

The balance between the components described above enables obtaining a superabsorbent polymeric hydrogel exhibiting highly competitive water absorption properties compared to commercial products. Furthermore, the product is 100% based on compounds of natural origin and is fully biodegradable, making it a prominent option in terms of environmental sustainability, high water absorption capacity, and promotion of seed germination.

### APPLICATION EXAMPLES

### Example 1: Preparation of superabsorbent.

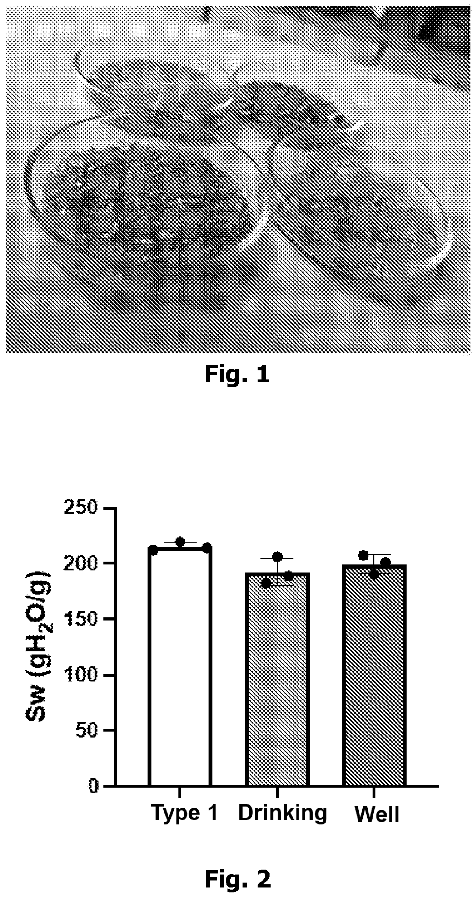

For preparation of the superabsorbent, CMC is initially added to water under mechanical stirring at 100 rpm for 30 minutes at room temperature. Subsequently, HEC is added at a CMC/HEC 3:1 ratio, maintaining a total polymer concentration from 1.0 to 5.0% w/v with respect to water; The mixture is stirred for 4 hours at room temperature until a homogeneous, translucent mixture of biopolymers is obtained. Subsequently, CA is added in an amount from 0.5 to 5.0% w/w and tannic acid (TA) in an amount from 0.25 to 3.0% w/w, both with respect to the polymer, and is incorporated by mechanical stirring at 100 rpm for 2 hours at room temperature. Finally, the obtained mixture is dehydrated and crosslinked for 12 hours at a temperature between 30 - 60 °C. The solid obtained was crushed into solid particles of crystalline appearance (Fig. 1).

### Example 2: Evaluation of water absorption capacity of hydrogel

The water absorption capacity is conditioned by several factors, mainly the degree of crosslinking that depends on concentration of TA and CA crosslinking agents. The water absorption capacity was evaluated by swelling tests (Sw). The Sw was determined by the difference in weight of the hydrogel between the swollen sample after 24 h of hydration in water and the finally dried sample according to the following general procedure. To maintain homogeneous hydration, samples were shaken on a multidimensional orbital shaker (Heidolph, Unimax 1010 DT) for 24 h at room temperature. After this time, the hydrogel was filtered through an 80 µm Nylon mesh (Merck) to remove excess water and immediately weighed to obtain the swollen weight (w_{S}). Subsequently, the hydrated samples are completely dried to obtain the dry weight (w_{D}). All samples were analyzed in triplicate. Finally, Sw was calculated by the following equation: $Sw = \frac{{w}_{s} - {w}_{d}}{{w}_{d}}$

After preparing the superabsorbent with the following formulation: biopolymer 5% w/w, AC 0.5% w/w and AT 0.25% w/w, a Sw of 180 g/g was achieved.

Evaluation of types of water: The superabsorbent was immersed in different types of water to evaluate its performance, these types are: deionized water (type I), drinking water and underground well water (see Fig. 2). It is observed that there are no significant differences regarding the water absorption capacity (SW) of the superabsorbent with respect to the type of water, being able to demonstrate that the material can perform optimally in both laboratory, domestic and rural conditions.

### Example 3: Evaluation of superabsorbent disintegration in soils.

Biodegradability was determined by evaluating the degree of disintegration of the materials tested under ISO 20200:2015, which simulated an intensive aerobic composting process. The solid matrix inside the reactors was composed of a synthetic solid residue inoculated with the mature compost from a municipal or industrial composting facility. The fragments of the materials tested were placed within the solid matrix that was previously prepared. The disintegration degree was determined after a composting cycle of 45 calendar days, as a minimum time, and can be extended to day 90. For this procedure, a sample of the hydrogel reported in this invention was deposited within a reactor, in addition, a positive blank (cellulose), a negative blank (polypropylene) and a reactor with synthetic compost without sample. The wet synthetic waste content within each reactor was 1500 g. The thermophilic incubation period or time in which the reactors remained inside a forced ventilation oven at 58 ± 1 °C was 45 calendar days. Then, the composted material was subjected to the sieving process, taking into account the 10 mm, 4.75 mm and 2 mm meshes, in order to recover the non-disintegrated residues. The reduction in mass and volume of the test sample is considered disintegrated material and is used to calculate the disintegration degree.

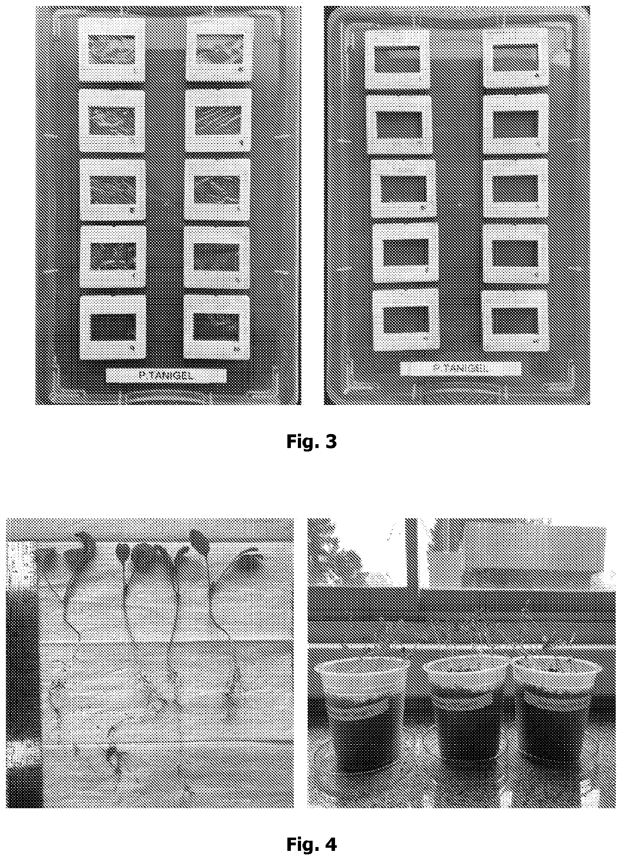

For each sample, the decrease in the total volatile solids content between the initial synthetic residue and the compost obtained at the end of the test must be equal to or greater than 30%, in the case of the polymer reported in this invention, the value of was around 90%, so the sample complies with the provisions of the standard. Finally, a disintegration degree of 100% is reported for the hydrogel reported in this invention after 15 days of study, which indicates that it is a biodegradable superabsorbent (Fig. 3).

### Example 4: Determination of superabsorbent ecotoxicity

The ecotoxicological effects of the superabsorbent on the growth of higher plants were determined in accordance with the OEDC 208 Standard and Annex E of the UNE-EN 13432:2001 standard that accounts for ecotoxicity. To do this, pots containing 50% reference substrate and 50% compost based on weight were used. 14 seeds of Rabanito sparkler were sown in pots and incubated at 20°C ± 2°C in dark for 5 days to 7 days and then exposed to light of at least 3000 lux for at least 12 hours a day. The test ends after 11 ± 1 days. At the end of the test, the total fresh and dry weight of the plant material on the ground is determined for each pot separately. The germination rate is also measured. Toxicity of potential test item residues is evaluated by comparing germination results and plant performance of test compost to blank compost.

The results shown in this test indicated that the mixture resulting from composting under study does not affect the plant growth and extension with respect to the control sample, all had favorable seedling growth (Fig. 4) demonstrating that the superabsorbent is not ecotoxic. Finally, it is worth mentioning that no signs of chlorosis and necrosis were observed.

### Example 5: Evaluation of superabsorbent water retention in different soil types

Tests were conducted using two types of soil: sandy and sandy loam, with varying concentrations of superabsorbent (0.3, 0.5, 0.8, and 1.0% w/w) with respect to the amount of soil. The total soil mass per test was one kilogram.

The effect of hydrogel addition on the water retention capacity of the soils was studied by obtaining the soil moisture retention curve.

The specific pressures applied in the experiment were 10, 33, 300, 500, and 1500 kPa. Typically, the points at 33 kPa, known as field capacity (CC), and 1500 kPa, referred to as the permanent wilting point (PMP), are used to determine the plant-available water storage capacity. The plant-available water is calculated using the following equation: $Plant - available water \left(AU\right) = CC - PMP$

The term plant-available water refers to the amount of water in a soil that is available and accessible for plant uptake. When a superabsorbent is incorporated into soil, it has the ability to retain and gradually release water according to plant needs. In this way, and based on the ability of certain materials to retain water in soil and make it available for plants, it is possible to increase plant-available water (PAW) in soil, thereby benefiting agriculture and other fields where water availability is crucial.

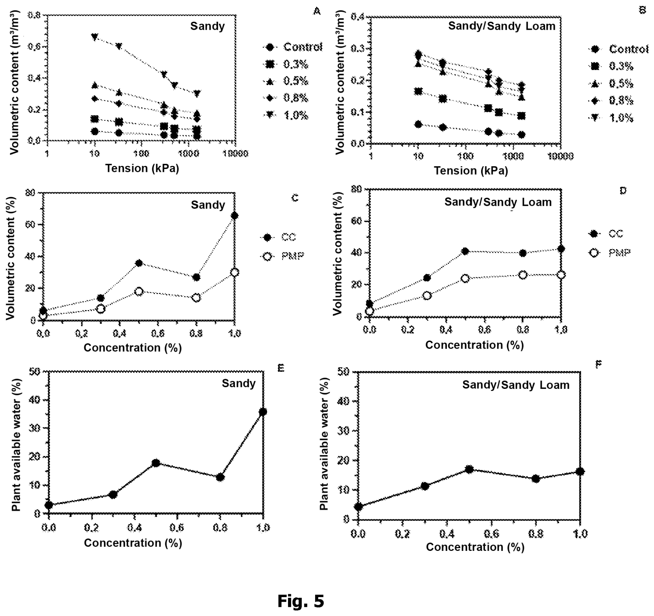

A notable improvement in soil moisture retention capacity is observed in sandy and sandy loam soils after application of the superabsorbent. This is reflected in a marked difference in the soil moisture retention curves (see Fig. 5A-5D). As the concentration of superabsorbent varies, each test point exhibits a significant increase in volumetric water content. In this manner, both sandy and sandy loam soils respond effectively to the incorporation of superabsorbent.

With respect to plant-available water (PAW), a significant improvement is observed in the soil moisture retention curve and in the amount of plant-available water (see Fig. 5E and 5F).

### Example 6: Morphometric response assay of Solanum lycopersicum to superabsorbent application.

Plastic trays with 50 cells, each measuring 50 × 46 × 30 mm (0.073 L per cell), were used. The following gradient of superabsorbent doses or concentrations per cell was established: 0.0 g (control), 0.17 g, 0.27 g, 0.37 g, and 0.47 g, with 10 replicates. The doses were applied and incorporated into the soil by mixing at a depth of approximately 2 cm until homogeneity between the soil and the superabsorbent was achieved. Two seeds were sown in each cell and irrigated with water until moistening was achieved. The trays were covered with a transparent plastic lid and placed in a growth chamber at a temperature of 20 ± 2 °C, relative humidity of 60 ± 5%, light intensity of 50 µmol m⁻² s⁻¹, and a photoperiod of 16/8 h (light/dark). After 15 days, thinning was performed, leaving one plant per cell. Irrigation was carried out every 4 days for the control, which corresponds to the standard frequency established for this seedling production model, and every 8 days for the treatments with the superabsorbent. During the first 4 weeks, 5 mL of water per cell per irrigation event were applied, and thereafter this volume was increased to 10 mL until the end of the experiment. The experiment was evaluated 10 weeks after establishment based on the response of the following morphometric variables: plant length, number of true leaves, and primary root length.

In general, plant growth responded favorably to the superabsorbent, regardless of the variations among the different concentrations. It is expected that, under control, the different variables exhibit relatively better responses, as these represent optimal conditions for crop growth. In the control, irrigation was carried out every 4 days, whereas in the treatments it was applied every 8 days. That is, the irrigation interval was doubled in the treatments. In this way, under this irrigation frequency, plants utilized the water released by the superabsorbent.

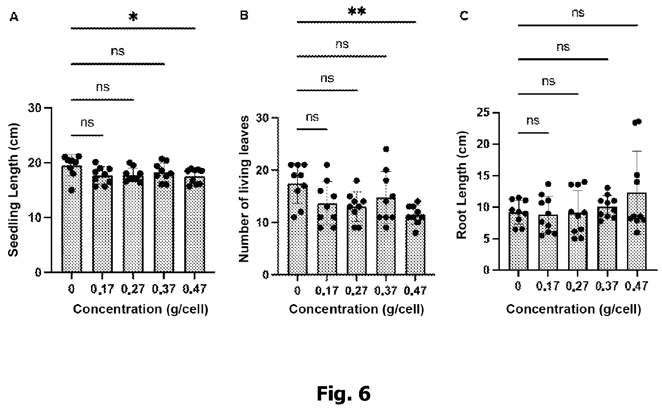

In this case, the study focused on the stage corresponding to tomato cultivation initial growth, where plants can reach approximately 20 cm in height with about 15 to 20 true leaves. The morphometric results, defined by length (Fig. 6A), number of true leaves (Fig. 6B), and root length (Fig. 6C), demonstrated that the superabsorbent effectively supports the development of these morphological variables, comparable to the control, while using half the irrigation input.

## Claims

1. A biopolymeric composition for generating a superabsorbent hydrogel **CHARACTERIZED in that** it comprises at least:
a. A biodegradable matrix comprising a mixture of polysaccharides, preferably carboxymethyl cellulose (CMC) and hydroxyethyl cellulose (HEC) in a 3:1 ratio, maintaining a total polysaccharide concentration of from 1.0 to 5.0% w/v with respect to water;
b. A physical crosslinking agent derived from hydrolyzable tannins, preferably tannic acid (TA), in a concentration from 0.25 to 3.0% w/w with respect to the polysaccharide mixture; and
c. A chemical crosslinker of natural origin, preferably citric acid (CA), in a concentration from 0.5% to 5.0% w/w with respect to the polysaccharide mixture.

2. A biopolymeric composition for generating a superabsorbent hydrogel according to claim 1, **CHARACTERIZED in that** the mixture of polysaccharides, preferably carboxymethyl cellulose (CMC) and hydroxyethyl cellulose (HEC), impart hydrophilicity and biodegradability to the superabsorbent hydrogel.

3. A biopolymeric composition for generating a superabsorbent hydrogel according to claim 1, **CHARACTERIZED in that** the physical crosslinking agent derived from hydrolyzable tannins imparts flexibility to the polymer matrix.

4. A biopolymeric composition for generating a superabsorbent hydrogel according to claim 1, **CHARACTERIZED in that** the chemical crosslinker preferably citric acid (CA) provides structural stability to the hydrogel.

5. A biopolymeric composition for generating a superabsorbent hydrogel according to claim 1, **CHARACTERIZED in that** it is in the form of a dry powder.

6. A process for preparing a biopolymeric composition, **CHARACTERIZED in that** it comprises at least the following steps:
i. adding CMC to water under mechanical stirring at 80 - 120 rpm for 20 - 60 minutes at room temperature;
ii. adding HEC at a CMC/HEC 3:1 ratio, maintaining a total polymer concentration from 1.0 to 5.0% w/v with respect to water;
iii. mixing under stirring for 2 - 8 hours at room temperature until a homogeneous, translucent mixture of biopolymers is obtained;
iv. adding CA in an amount from 0.5 to 5.0% w/w and tannic acid (TA) in an amount from 0.25 to 3.0% w/w, both with respect to the polymer, and incorporating them by mechanical stirring at 80-120 rpm for 2 hours at room temperature; and
v. crosslinking and dehydrating the resulting mixture by heating at a temperature from 30 to 60 °C for 12 hours, followed by grinding to obtain crystalline-like solid particles.

7. A process for obtaining a biopolymeric composition for generating a superabsorbent hydrogel, according to claim 6, **CHARACTERIZED in that** the crosslinking provides structural stability and provides volume to accommodate water molecules and elasticity to the network for expansion with the solvent.

8. Use of the biopolymeric composition for generating a superabsorbent hydrogel according to claim 1, **CHARACTERIZED in that** it is used to be applied to soils, and upon contact with water, forms the superabsorbent hydrogel.

9. Use of the biopolymeric composition for generating a superabsorbent hydrogel according to claim 8, **CHARACTERIZED in that** it is used to improve soil water retention capacity, which is essential for the development of sustainable agriculture.

10. Use of the biopolymeric composition for generating a superabsorbent hydrogel according to claim 8, **CHARACTERIZED in that** it is used to form a hydrogel suitable for the release of water and other agronomically relevant substances.

11. Use of the biopolymeric composition for generating a superabsorbent hydrogel according to claim 8, **CHARACTERIZED in that** it enables crosslinking within the polymer that reduces the biodegradation rate, thereby extending the useful life of hydrogel in soil.

12. Use of the biopolymeric composition for generating a superabsorbent hydrogel, according to claim 8, **CHARACTERIZED in that** it enables crosslinking that provides structural stability, provides volume to accommodate water molecules and elasticity to the network for expansion with the solvent.

13. Use of the biopolymeric composition for generating a superabsorbent hydrogel, according to claim 8, **CHARACTERIZED in that** it is used for generating a product 100% of natural origin and 100% biodegradable, with high water absorption capacity and promotion of seed germination.
